# EUROPÄISCHE PATENTSCHRIFT

(11) **EP 3 196 522 B1**
(45) Veröffentlichungstag und Bekanntmachung des Hinweises auf die Patenterteilung: **17.10.2018**
(21) Anmeldenummer: 17151580.2
(22) Anmeldetag: 16.01.2017
(51) Int. Cl.: F16K 31/44, F16K 7/02, F16K 11/07

(54) **STELLVORRICHTUNG**
ACTUATING DEVICE
DISPOSITIF D'ACTIONNEMENT

(30) Priorität: 21.01.2016 DE 102016100998
(43) Veröffentlichungstag der Anmeldung: 26.07.2017
(60) Teilanmeldung: 18190451.7
(73) Patentinhaber: Viessmann Werke GmbH & Co. KG, 35108 Allendorf (DE)
(72) Erfinder: Dönges, Roger, 35110 Frankenau (Dainrode) (DE); Gaier, Andrei, 35066 Frankenberg (DE)
(74) Vertreter: Wolf, Michael

(56) Entgegenhaltungen:
- EP-A1- 0 165 494
- CN-Y- 201 359 114
- DE-A1-102014 207 674
- FR-A- 1 182 363
- NL-A- 6 808 736
- US-A- 2 106 572
- US-A- 5 207 409
- US-B1- 6 434 353

## Beschreibung

Die Erfindung betrifft eine Verrohrung mit einer Stellvorrichtung und einem Ventil gemäß dem Oberbegriff des Patentanspruchs 1.
Eine Stellvorrichtung der eingangs genannten Art ist aus dem Patentdokument DE 1 289 703 A bekannt. Diese als pneumatisches Regelventil ausgebildete Stellvorrichtung besteht aus einem Wellrohrabschnitt mit einer wellenförmigen Rohrwandung, einem außerhalb des Wellrohrabschnitts angeordneten Außenstellelement ("Führungsring 3") und einem innerhalb des Wellrohrabschnitts angeordneten Innenstellelement ("Ventilnadel 1"), wobei das Außenstellelement mit dem Innenstellelement wirkverbunden ausgebildet ist. Bei dieser Lösung sind genauer betrachtet mehrere Wellrohrabschnitt vorgesehen, wobei das Au-ßenstellelement zwischen zwei Wellrohrabschnitt angeordnet und darüber hinaus unmittelbar mit dem Innenstellelement verbunden ausgebildet ist.

DE 10 2014 207 674 A1 offenbart eine Verrohrung nach dem Oberbegriff des Anspruchs 1. US 5,207,409 offenbart ein Quetschventil.

Der Erfindung liegt die Aufgabe zugrunde, eine Verrohrung der eingangs genannten Art zu verbessern, insbesondere zu vereinfachen.

Diese Aufgabe ist mit einer Verrohrung der eingangs genannten Art durch die im Kennzeichen des Patentanspruchs 1 aufgeführten Merkmale gelöst.
Nach der Erfindung ist also vorgesehen, dass mindestens das Außen- oder das Innenstellelement zur Übertragung einer Kraft vom Außen- auf das Innenstellelement oder umgekehrt einen an die wellenförmige Rohrwandung angepassten Kontaktbereich aufweist.
Mit anderen Worten zeichnet sich die erfindungsgemäße Stellvorrichtung somit dadurch aus, dass zur Übertragung einer Kraft von einem auf das andere Stellelement unmittelbar die wellenförmige Rohrwandung selbst über einen Formschluss mit dem Kontaktbereich und nicht mehr ein zwischen zwei Wellrohrabschnitten angeordnetes Ringelement verwendet wird. Dies führt dazu, dass insgesamt weniger Bauteile erforderlich sind, verbunden mit dem Vorteil, dass die gesamte Vorrichtung insgesamt leichter abzudichten ist.
Bezüglich des oben mehrfach verwendeten Begriffs "Wellrohr" ist dabei noch anzumerken, dass darunter gemäß https://de.wikipedia.org/w/index.php?title=Wellrohr&oldid=134252430 ein Rohr aus starrem Material mit wellenförmig wechselndem Durchmesser zu verstehen ist, das aufgrund der Wellung flexibel geworden ist.
Andere vorteilhafte Weiterbildungen der erfindungsgemäßen Verrohrung ergeben sich aus den abhängigen Patentansprüchen.

Die erfindungsgemäße Verrohrung einschließlich ihrer 25 vorteilhaften Weiterbildungen gemäß der abhängigen Patentansprüche wird nachfolgend anhand der zeichnerischen Darstellung verschiedener Ausführungsbeispiele näher erläutert.
Es zeigt
- Figur 1: perspektivisch und teilweise im Schnitt eine nicht erfindungsgemäßen Verrohrung bei der eine Rohrströmung auf zwei Rohre aufgeteilt wird;
- Figur 2: perspektivisch und teilweise im Schnitt die Stellvorrichtung gemäß Figur 1, bei der die Rohrströmung in eines der beiden Rohre umgeleitet wird;
- Figur 3: perspektivisch und teilweise im Schnitt die Stellvorrichtung gemäß Figur 1, bei der die Rohrströmung in das andere der beiden Rohre umgeleitet wird;
- Figur 4: perspektivisch das Innenstellelement der Ausführungsform gemäß den Figuren 1 bis 3 mit seinen insgesamt sechs an die Rohrwandung angepassten Kontaktbereichen;
- Figur 5: perspektivisch und teilweise im Schnitt eine Ausführungsform der erfindungsgemäßen Verrohrung, bei der eine Rohrströmung mit einer Verschlussblende durchgelassen oder abgesperrt werden kann, hier in Durchlassposition; und
- Figur 6: perspektivisch und teilweise im Schnitt die Stellvorrichtung gemäß Figur 5 in Absperrposition.

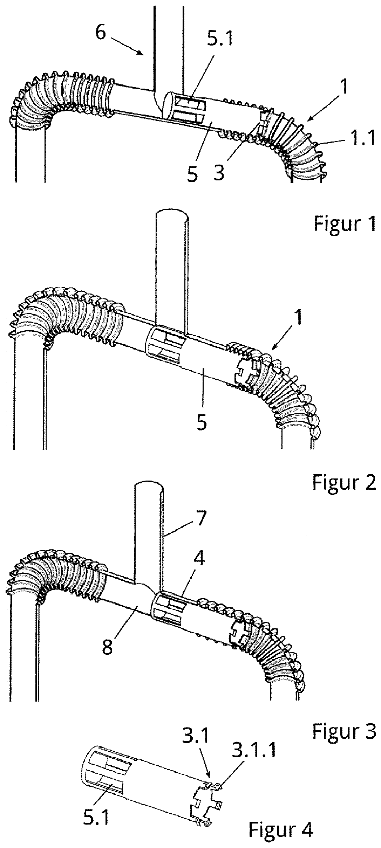

Die in den Figuren dargestellte Stellvorrichtung besteht aus einem Wellrohrabschnitt 1 mit einer wellenförmigen Rohrwandung 1.1, einem außerhalb des Wellrohrabschnitts 1 angeordneten Au-ßenstellelement 2 (in den Figuren 1 bis 4 nicht extra dargestellt) und einem innerhalb des Wellrohrabschnitts 1 angeordneten Innenstellelement 3, wobei das Außenstellelement 2 mit dem Innenstellelement 3 wirkverbunden ausgebildet ist.
Wesentlich für alle möglichen Ausführungsformen der erfindungsgemäßen Stellvorrichtung ist, dass mindestens das Außenoder das Innenstellelement 2, 3 zur Übertragung einer Kraft vom Außen- auf das Innenstellelement 2, 3 oder umgekehrt einen an die wellenförmige Rohrwandung 1.1 angepassten Kontaktbereich 2.1, 3.1 aufweist.

Dabei ist bevorzugt vorgesehen, dass der Wellrohrabschnitt 1 wahlweise aus Kunststoff oder Metall gebildet ist. Zudem ist vorzugsweise an mindestens einer Seite des Wellrohrabschnittes 1 ein glattzylindrisches Rohrstück 4 fluiddicht anschließend angeordnet. Wellrohrabschnitt 1 und Rohrstück 4 können dabei (müssen aber nicht) einstückig ausgebildet sein.

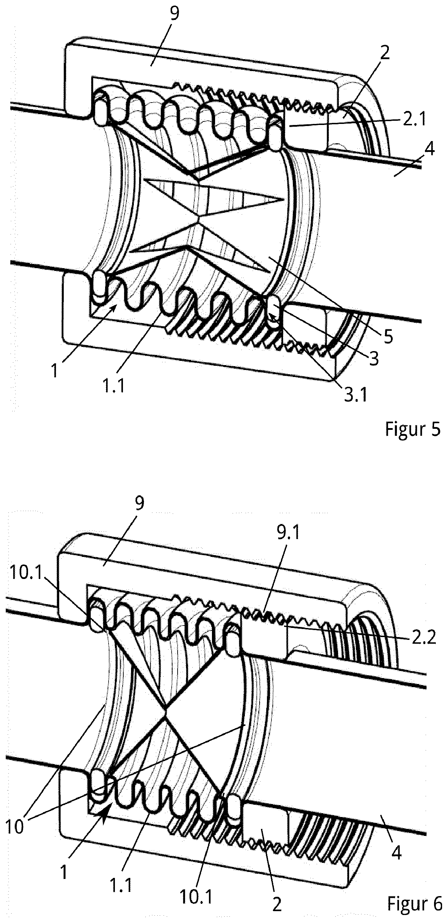

Bezüglich des Außenstellelements 2 ist bevorzugt vorgesehen, dass dieses an einem den Kontaktbereich 2.1 bildenden, vorzugsweise als Wellenschulter ausgebildeten, Übergangsteil zwischen dem Wellrohrabschnitt 1 und dem Rohrstück 4 angeordnet ist. Außerdem ist vorzugsweise das Außenstellelement 2 mindestens einen Abschnitt des Rohrstücks 4 vollständig umschließend und/oder das Rohrstück 4 hohlzylinderförmig umgreifend ausgebildet (siehe Figuren 5 und 6). Im Falle eines beidendig fixierten Wellrohrabschnittes 1 ist das Außenstellelement 2 bevorzugt an einem mittleren Bereich des Wellrohrabschnittes 1 formschlüssig angreifend ausgebildet.

Wie ebenfalls in den Figuren 5 und 6 zu erkennen ist, ist das Außenstellelement 2 vorzugsweise auf seiner dem Rohrstück 4 abgewandten Seite profiliert ausgebildet, wobei dieses erste Profil 2.2 im speziellen ein Wellen-, Zacken- oder Schraubenprofil ist.

Weiterhin ist es erfindungsgemäß möglich, dass ein mit dem Au-ßenstellelement 2 kraftschlüssig verbundenes Schiebeelement 9 vorgesehen ist. Das Schiebeelement 9 ist vorzugsweise hohlzylinderförmig ausgebildet und umgreift Teile des Rohrstücks 4 und den Wellrohrabschnitt 1.
Zusätzlich ist bevorzugt vorgesehen, dass das Schiebeelement 9 auf seiner dem Rohrstück 4 zugewandten Seite ein zweites Profil 9.1 aufweist und dass das oben genannte erste Profil 2.2 und das zweite Profil 9.1 kraftschlüssig ineinandergreifend ausgebildet sind.
In Bezug auf das Innenstellelement 3 ist bevorzugt, dass dieses zumindest teilweise einen Außendurchmesser aufweist, der größer als der kleinste Innendurchmesser, aber kleiner als der größte Innendurchmesser des Wellrohrabschnitts 1 ist und/oder dass der Wellrohrabschnitt 1 als Teil einer mit einem Ventil 5 versehenen Verrohrung 6 und das Innenstellelement 3 mit dem Ventil 5 wirkverbunden ausgebildet ist. Ist das Ventil 5 nicht vollumpfänglich fluidisch dicht verschließbar ausgebildet, kann hier auch von einem Drosselelement statt von einem Ventil gesprochen werden.
Im Weiteren werden die Besonderheiten zweier spezieller Ausführungsbeispiele der Stellvorrichtung beschrieben.

Ausführungsbeispiel 1 ist in den Figuren 1 bis 4 gezeigt und weist bevorzugt ein Innenstellelement 3 auf, welches an seinem Umfangsrand mit den Kontaktbereich 3.1 bildenden Hakenelementen 3.1.1 versehen ist (Figur 4), welche in die wellenförmige Rohrwandung (1.1) eingreifen.
Weiterhin ist in diesem Fall die Verrohrung 6 aus dem Rohrstück 4 und einem seitlich vom Rohrstück 4 abzweigenden Zusatzrohrstück 7 gebildet und vorzugsweise das Ventil 5 in Form eines vom Wellrohrabschnitt 1 bis zu einem Übergangsbereich 8 zwischen dem Rohrstück 4 und dem Zusatzrohrstück 7 reichenden, wellrohrabschnittabgewandt stirnseitig verschlossenen und innerhalb des Rohrstücks 4 verschieblich gelagerten Zylinders mit mindestens einer an seiner Mantelfläche vorgesehenen Durchgangsöffnung 5.1 ausgebildet. Diese Form der Stellvorrichtung ist besonders für verzweigte Rohrleitungen geeignet.
Die Figuren 5 und 6 zeigen ein zweites Ausführungsbeispiel, bei dem das Ventil 5 innerhalb des Wellrohrabschnittes 1 angeordnet und das Innenstellelement 3 bevorzugt annähernd ringförmig ausgebildet ist. Weiterhin ist hierbei vorzugsweise das Ventil 5 in Verschlussstellung in Form zweier sich an ihrer Spitze berührender Kegel ausgebildet, wobei jeder Kegel eine gedachte Grundfläche 10 aufweist und diese Grundflächen 10 über Kontaktbereiche 10.1 mit der wellenförmigen Rohrwandung 1.1 wirkverbunden und zueinander verstellbar ausgebildet sind. Diese erfindungsgemäße Variante eignet sich besonders für eine Stellvorrichtung in einem geraden Rohr.
Die erfindungsgemäße Stellvorrichtung funktioniert wie folgt: Ausgehend von einem zunächst geöffneten Ventil (oder Drosseleinrichtung) 5 kann der Fluidfluss durch die Verrohrung 6 unterbrochen (oder gedrosselt) werden, indem das Außenstellelement 2 bewegt wird. Dies staucht den Wellrohrabschnitt 1 und verschiebt damit auch das Innenstellelement 3, welches mit dem Ventil 5 verbunden ist. Das Ventil 5 wird so geschlossen. Das Bewegen des Außenstellelements 2 kann per Hand, oder auch automatisch - beispielsweise mit einem Motor - erfolgen und zwar entweder direkt über das Außenstellelement 2 selbst, oder über das eventuell vorhandene Schiebeelement 9. Des weiteren kann neben dem Verschließen oder Drosseln des Fluidflusses durch die Verrohrung 6 auch eine Umleitung des Fluids bewirkt werden, wie es etwa im ersten Ausführungsbeispiel in den Figuren 1 bis 3 der Fall ist.

### Bezugszeichenliste

- 1: Wellrohrabschnitt
- 1.1: Wellenförmige Rohrwandung
- 2: Außenstellelement
- 2.1: Kontaktbereich
- 2.2: Erstes Profil
- 3: Innenstellelement
- 3.1: Kontaktbereich
- 3.1.1: Hakenelement
- 4: Rohrstück
- 5: Ventil
- 5.1: Durchgangsöffnung
- 6: Verrohrung
- 7: Zusatzrohrstück
- 8: Übergangsbereich
- 9: Schiebeelement
- 9.1: Zweites Profil
- 10: Grundfläche
- 10.1: Kontaktbereich

## Patentansprüche

1. Verrohrung mit einer Stellvorrichtung und einem Ventil, umfassend einen Wellrohrabschnitt (1) mit einer wellenförmigen Rohrwandung (1.1), ein außerhalb des Wellrohrabschnitts (1) angeordnetes Außenstellelement (2) und ein innerhalb des Wellrohrabschnitts (1) angeordnetes Innenstellelement (3), wobei das Außenstellelement (2) mit dem Innenstellelement (3) wirkverbunden ausgebildet ist, wobei mindestens das Außen- oder das Innenstellelement (2, 3) zur Übertragung einer Kraft vom Außen- auf das Innenstellelement (2, 3) oder umgekehrt einen an die wellenförmige Rohrwandung (1.1) angepassten Kontaktbereich (2.1, 3.1) aufweist, wobei der Wellrohrabschnitt (1) als Teil der mit dem Ventil (5) versehenen Verrohrung (6) und das Innenstellelement (3) mit dem Ventil (5) wirkverbunden ausgebildet ist,
**dadurch gekennzeichnet,**
**dass** das Ventil (5) in Verschlussstellung in Form zweier sich an ihrer Spitze berührender Kegel ausgebildet ist.

2. Verrohrung nach Anspruch 1,
**dadurch gekennzeichnet,**
**dass** das Außenstellelement (2) bei beidendig fixiertem Wellrohrabschnitt (1) an einem mittleren Bereich des Wellrohrabschnittes (1) formschlüssig angreifend ausgebildet ist.

3. Verrohrung nach Anspruch 1 oder 2,
**dadurch gekennzeichnet,**
**dass** sich an mindestens einer Seite des Wellrohrabschnittes (1) ein glattzylindrisches Rohrstück (4) fluiddicht anschließend angeordnet ist.

4. Verrohrung nach Anspruch 3,
**dadurch gekennzeichnet,**
**dass** das Außenstellelement (2) an einem den Kontaktbereich (2.1) bildenden, vorzugsweise als Wellenschulter ausgebildeten, Übergangsbereich zwischen dem Wellrohrabschnitt (1) und dem Rohrstück (4) angeordnet ist.

5. Verrohrung nach einem der Ansprüche 1 bis 4,
**dadurch gekennzeichnet,**
**dass** das Innenstellelement (3) an seinem Umfangsrand mit den Kontaktbereich (3.1) bildenden Hakenelementen (3.1.1) versehen ist.

6. Verrohrung nach einem der Ansprüche 1 bis 5,
**dadurch gekennzeichnet,**
**dass** das Innenstellelement (3) zumindest teilweise einen Außendurchmesser aufweist, der größer als der kleinste Innendurchmesser, aber kleiner als der größte Innendurchmesser des Wellrohrabschnitts (1) ist.

## Claims

1. A piping with an actuating device and a valve, comprising a corrugated pipe section (1) having a corrugated pipe wall (1.1.), an outer actuating element (2) arranged outside the corrugated pipe section (1) and an inner actuating element (3) arranged inside the corrugated pipe section (1), wherein the outer actuating element (2) is configured to be operatively connected to the inner actuating element (3), wherein at least the outer or the inner actuating element (2, 3) has a contact region (2.1, 3.1) adapted to the corrugated pipe wall (1.1) for transmission of a force from the outer to the inner actuating element (2, 3) or conversely, wherein the corrugated pipe section (1) is configured as part of the piping (6) provided with the valve (5) and the inner actuating element (3) is operatively connected to the valve (5),
**characterized in that**
the valve (5) in the closure position is configured in the form of two cones which are in contact at their tip.

2. The piping according to claim 1,
**characterized in that**
the outer actuating element (2) is configured to act positively on a central region of the corrugated pipe section (1) when the corrugated pipe section (1) is fixed at both ends.

3. The piping according to claim 1 or 2,
**characterized in that**
a smooth cylindrical pipe piece (4) is arranged in a fluid-tight manner adjoining at least one side of the corrugated pipe section (1).

4. The piping according to claim 3,
**characterized in that**
the outer actuating element (2) is arranged on a transition region between the corrugated pipe section (1) and the pipe piece (4) which forms the contact region (2.1) and is preferably configured as a corrugation shoulder.

5. The piping according to one of claims 1 to 4,
**characterized in that**
the inner actuating element (3) is provided on its circumferential edge with hook elements (3.1.1) forming the contact region (3.1).

6. The piping according to one of claims 1 to 5,
**characterized in that**
the inner actuating element (3) at least in parts has an outside diameter which is larger than the smallest inside diameter but is smaller than the largest inside diameter of the corrugated pipe section (1).

## Revendications

1. Tuyauterie comportant un dispositif de réglage et une soupape, comprenant une portion de tuyau ondulé (1) avec une paroi de tuyau de forme ondulée (1.1), un élément d'ajustement extérieur (2) disposé à l'extérieur de la portion de tuyau ondulé (1) et un élément d'ajustement intérieur (3) disposé à l'intérieur de la portion de tuyau ondulé (1), dans laquelle l'élément d'ajustement extérieur (2) est conçu de manière reliée opérationnellement à l'élément d'ajustement intérieur (3), dans laquelle au moins l'élément d'ajustement extérieur ou intérieur (2, 3) présente afin de transmettre une force de l'élément d'ajustement extérieur à l'élément d'ajustement intérieur (2, 3) ou inversement une zone de contact (2.1, 3.1) adaptée à la paroi de tuyau de forme ondulée (1.1), dans laquelle la portion de tuyau ondulé (1) est conçue comme une partie de la tuyauterie (6) pourvue de la soupape (5) et l'élément d'ajustement intérieur (3) est conçu de manière reliée opérationnellement à la soupape (5),
**caractérisée en ce que**
la soupape (5) dans la position de fermeture est conçue sous la forme de deux cônes se contactant à leur pointe.

2. Tuyauterie selon la revendication 1,
**caractérisée en ce que**
l'élément d'ajustement extérieur (2) est conçu sur la portion de tuyau ondulé (1) fixée aux deux extrémités de manière à s'engager par conjonction de forme sur une zone centrale de la portion de tuyau ondulé (1).

3. Tuyauterie selon la revendication 1 ou 2,
**caractérisée en ce que**
sur au moins un côté de la portion de tuyau ondulé (1) une section de tuyau (4) cylindrique lisse est disposée de manière à se raccorder de manière étanche aux fluides.

4. Tuyauterie selon la revendication 3,
**caractérisée en ce que**
l'élément d'ajustement extérieur (2) est disposé sur une zone de transition entre la portion de tuyau ondulé (1) et la section de tuyau (4), formant la zone de contact (2.1), réalisée de préférence comme un épaulement d'arbre.

5. Tuyauterie selon une des revendications 1 à 4,
**caractérisée en ce que**
l'élément d'ajustement intérieur (3) est pourvu sur son bord circonférentiel d'éléments de crochets (3.1.1) formant la zone de contact (3.1).

6. Tuyauterie selon une des revendications 1 à 5,
**caractérisée en ce que**
l'élément d'ajustement intérieur (3) présente au moins partiellement un diamètre extérieur, qui est plus grand que le plus petit diamètre intérieur, mais plus petit que le plus grand diamètre intérieur de la section de tuyau ondulé (1).
